# EUROPÄISCHE PATENTSCHRIFT

(11) **EP 1 987 719 B1**
(45) Veröffentlichungstag und Bekanntmachung des Hinweises auf die Patenterteilung: **08.04.2015**
(21) Anmeldenummer: 08008449.4
(22) Anmeldetag: 05.05.2008
(51) Int. Cl.: A22C 11/02

(54) **Darmbremse mit einstellbarer Bremskraft**
Sausage skin brake with adjustable brake power
Frein de boyau doté d'une force de freinage réglable

(30) Priorität: 03.05.2007 DE 102007020805
(43) Veröffentlichungstag der Anmeldung: 05.11.2008
(73) Patentinhaber: Poly-clip System GmbH & Co. KG, 65795 Hattersheim (DE)
(72) Erfinder: Hanten, Jürgen, 61231 Bad Nauheim (DE); Zurwieden, Martin, 48336 Sassenberg (DE)
(74) Vertreter: Eisenführ Speiser

(56) Entgegenhaltungen:
- EP-A- 0 126 474
- EP-A- 1 763 999
- DE-B3-102005 044 879
- GB-A- 2 109 219
- US-A- 4 970 758
- US-A- 5 916 019

## Beschreibung

Die vorliegende Erfindung betrifft eine Rückhaltevorrichtung für ein schlauchförmiges Verpackungshüllenmaterial zur Aufnahme eines viskosen oder granularen Füllguts in einer Verpackungsmaschine, insbesondere einer Clipmaschine, gemäß dem Oberbegriff des Anspruchs 1 sowie eine Clipmaschine gemäß dem Oberbegriff des Anspruchs 14.

Insbesondere betrifft die Erfindung eine Rückhaltevorrichtung für ein schlauchförmiges Verpackungshüllenmaterial zur Aufnahme eines viskosen oder granularen Füllguts in einer Verpackungsmaschine, insbesondere einer Clipmaschine, vorzugsweise einer Wurstclipmaschine, die ein Füllrohr zum Befüllen des schlauchförmigem Verpackungshüllenmaterials mit dem Füllgut, wie beispielsweise Wurstbrät aufweist. Dabei enthält die Rückhaltevorrichtung bzw. Darmbremse einen koaxial auf das Füllrohr aufsetzbaren ersten Bremsring, dessen Innendurchmesser größer ist als der Außendurchmesser des Füllrohrs und an dessen Innenumfang ein erstes Bremsmittel vorgesehen ist, an dem das Verpackungshüllenmaterial bzw. der Wurstdarm in Füllrichtung des Füllguts entgegen einer auf das Verpackungshüllenmaterial einwirkenden Reibkraft entlang führbar ist.

Weiterhin betrifft die vorliegende Erfindung eine Clipmaschine zum Herstellen von wurstförmigen Produkten, insbesondere Wurstprodukten, aus einem in ein schlauchförmiges Verpackungshüllenmaterial, wie beispielsweise einen Wurstdarm, füllbares viskoses oder granulares Füllgut, wie zum Beispiel ein Wurstbrät, wobei die Clipmaschine ein Füllrohr zum Befüllen des schlauchförmigem Verpackungshüllenmaterials mit dem Füllgut in Füllrichtung, einen auf dem Füllrohr angeordneten Vorrat an Verpackungshüllenmaterial und eine Rückhaltevorrichtung zum Aufbringen einer vorbestimmten Reibkraft aufweist, die auf das in Füllrichtung abziehbare Verpackungshüllenmaterial entgegen der Füllrichtung einwirkt.

In der Praxis ist es bekannt, dass beispielsweise bei der Herstellung von Wurstprodukten das Wurstbrät von einer Füllmaschine über ein Füllrohr der Verschließ- und Abtrenneinheit einer Clipmaschine zugeführt wird. In der Clipmaschine wird das Füllgut in ein durch einen ersten Clip einseitig verschlossenes, schlauchförmiges Verpackungshüllenmaterial abgefüllt und das schlauchförmige Verpackungshüllenmaterial durch Setzen eines zweiten Clips verschlossen. Anschließend wird das so entstandene Wurstprodukt von dem Vorrat des übrigen Verpackungshüllenmaterials abgetrennt und das fertiggestellte Wurstprodukt aus der Clipmaschine ausgetragen.

Wird Füllgut, bei dem es sich neben Wurstbrät beispielsweise auch um einen Kitt oder eine Dichtmasse handeln kann, durch das mit einer Füllmaschine in Verbindung stehende Füllrohr in die einseitig verschlossene, schlauchförmige Verpackungshülle eingebracht, bildet sich an der Füllrohrmündung ein wurstförmiges Produkt aus. Dabei wird aus dem Vorrat an Verpackungshüllenmaterial, welcher zuvor von Hand oder automatisch auf das Füllrohr aufgezogen oder zeitgleich mit dem Füllvorgang aus einer um das Füllrohr zu einem Schlauch gefalteten und versiegelten Flachbandfolie gebildet wurde, die Verpackungshülle durch den Fülldruck von dem Füllrohr abgezogen.

Bei bekannten Clipmaschinen ist um das Füllrohr herum in der Nähe der Füllrohrmündung ein Bremsring bzw. eine Darmbremse angeordnet. Diese Darmbremse, welche typischerweise eine ringförmige Gummilippe aufweist, ist elastisch gegen das Füllrohr vorgespannt und drückt die Verpackungshülle dadurch gegen das Füllrohr an. Durch diesen Druck wird eine Reibkraft erzeugt, die dafür sorgt, dass das Verpackungshüllenmaterial bzw. der Darm während des Füllvorgangs kontrolliert von dem auf dem Füllrohr angeordneten Vorrat abgezogen wird und dass - je nach Vorspannung des Bremsrings - eine Wurst mit gewünschter Prallheit erzeugt wird.

Eine solche Rückhaltevorrichtung bzw. Darmbremse ist aus der DE-Patentanmeldung 10 2005 044 879 bekannt. Diese Vorrichtung weist einen Halter auf, der parallel zur Füllrohrachse verfahren werden kann. In den Halter ist ein Bremsring einsetzbar, der das Füllrohr umfänglich umschließt und zum Erzeugen einer Reibkraft Druck auf das zwischen dem Bremsring und dem Füllrohr geführte Verpackungshüllenmaterial ausübt. Mittels eines Kurbelgetriebes kann der Bremsring in Abstimmung mit dem Füllvorgang über den Halter in Abzugsrichtung um eine bestimmte Länge mit dem Verpackungshüllenmaterial, oder entgegen der Abzugsrichtung, bewegt werden. Durch die Verschiebung des Bremsrings entgegen der Füllrichtung wird ein Ausweichvolumen für das Füllgut geschaffen, wodurch die Produktionsrate der Clipmaschine bei kontinuierlicher Befüllung des Verpackungshüllenmaterials weiter gesteigert werden kann.

Die EP-Patentanmeldung 0 126 474 offenbart eine Vorrichtung und ein Verfahren zum Stopfen bzw. Einfüllen eines fließfähigen Produkts in vorgefeuchtete Zellulosehüllen, die auf einem Kunststoffrohr aufgezogen, gerafft und verdichtet sind. Diese so gebildeten Hülleneinheiten werden mit dem Kunststoffrohr auf das Füllrohr gesteckt. Am vorderen, füllmaschinenfemen Ende des Kunststoffrohrs ist ein konisches Kalibrierelement in Form eines Dehnrings vorgesehen. Der Dehnring ist einstückig mit dem Kunststoffrohr verbunden. Ein kreisförmiger Halter umgibt das Füllrohr im Bereich seines füllmaschinenfernen Endes. An seiner Innenseite erstreckt sich ein Dämpfungselement in Form einer kreisringförmigen Scheibe, die die Hülle dicht an das Füllrohr anlegt und so den Rückfluss von Füllgut in die nichtbefüllte Hülle verhindert. Das Dämpfungselement ist entlang des Füllrohrs verfahrbar. Zu Beginn des Füllvorgangs ist das Dämpfungselement unmittelbar vor dem Kalibrierelement positioniert. In dieser Position wird durch die zusätzliche Umlenkung der Hülle um die Lippe herum in Richtung der Füllmaschine eine zusätzliche Rückhaltekraft erzeugt, die das vollständige Befüllen der Hülle ermöglicht. Ist die vorbestimmte Länge an Hülle befüllt, wird der Zufluss an Füllgut gestoppt und das Dämpfungselement in Füllrichtung zum Ende des Füllrohrs hin verschoben. Durch die so reduzierte Bremskraft wird bei dem folgenden und an sich bekannten Verschließvorgang zusätzliches Hüllenmaterial von der Hülleneinheit abgezogen.

Die bekannten Rückhaltevorrichtungen bzw. Darmbremsen weisen aber Nachteile auf. So ist die anfänglich durch die Wahl des Bremsrings eingestellte Reibkraft zumindest während des folgenden Produktionsprozesses konstant und im laufenden Prozess nicht oder nur mit erheblichen Unterbrechungen des Produktionsprozesses veränderbar. Bei einem Wechsel des Verpackungshüllenmaterials muss, um eine identische Reibung und damit eine identische Bremswirkung zu erzielen, entweder der momentan verwendete Bremsring gegen einen Bremsring mit einem anderen Innendurchmesser bzw. anderem Bremsverhalten getauscht werden, oder aber das Maß, mit dem der Bremsring zusammengedrückt wird, verändert, d.h. erhöht oder verringert werden. In beiden Fällen muss, wie bereits erwähnt, der Produktionsprozess unterbrochen werden. Darüber hinaus ist eine feine Justierung der Bremskraft nicht oder nur mit hohem zeitlichen Aufwand möglich. Ebenso kann ein Wechsel des Bremsrings bei Veränderung des Fülldrucks oder aber die Veränderung des Quetschwertes des Bremsrings notwendig sein.

Ausgehend davon ist es Aufgabe der vortiegenden Erfindung, eine Rückhaltevorrichtung und eine Clipmaschine bereit zu stellen, welche die vorgenannten Nachteile überwinden. Insbesondere ist es Aufgabe der vorliegenden Erfindung, eine Rückhaltevorrichtung bzw. eine Clipmaschine bereit zu stellen, die es ermöglichen, die von der Rückhaltevorrichtung erzeugte Reibung den Material- und/oder Produktionsbedingungen auf einfache Weise entsprechend zu verändern.

Die vorstehende Aufgabe wird hinsichtlich der Rückhaltevorrichtung durch die Merkmale der Anspruchs 1 gelöst. In den sich daran anschließenden Ansprüchen 2 bis 13 finden sich vorteilhafte Ausgestaltungen hierzu.

Insbesondere wird eine Rückhaltevorrichtung für ein schlauchförmiges Verpackungshüllenmaterial zur Aufnahme eines viskosen oder granularen Füllguts in einer Verpackungsmaschine, insbesondere einer Clipmaschine, vorgeschlagen, die ein Füllrohr zum Befüllen des schlauchförmigem Verpackungshüllenmaterials mit dem Füllgut aufweist. Hierbei enthält die Rückhaltevorrichtung einen koaxial auf das Füllrohr aufsetzbaren ersten Bremsring, dessen Innendurchmesser größer ist als der Außendurchmesser des Füllrohrs und an dessen Innenumfang ein erstes Bremsmittel vorgesehen ist, an dem das Verpackungshüllenmaterial in Füllrichtung des Füllguts entgegen einer auf das Verpackungshüllenmaterial einwirkenden Reibkraft entlang führbar ist. Weiterhin ist vorgesehen, dass ein zweiter Bremsring vorhanden ist, der auf dem Füllrohr ortsfest anordenbar ist und der an seinem Außenumfang ein Gegenbremsmittel aufweist. Dabei ist das Verpackungshüllenmaterial zwischen dem ersten Bremsmittel des ersten Bremsrings und dem Gegenbremsmittel des zweiten Bremsrings hindurchführbar und der erste Bremsring ist zur Einstellung einer vorbestimmten Reibkraft für das Verpackungshüllenmaterial an dem ersten Bremsmittel des ersten Bremsrings und dem Gegenbremsmittel des zweiten Bremsrings in Füllrichtung reversibel verschiebbar. Durch eine solche Anordnung kann unabhängig von dem verwendeten bar. Durch eine solche Anordnung kann unabhängig von dem verwendeten Verpackungshüllenmaterial und/oder dem Fülldruck eine gewünschte Reibkraft zur Erzielung einer optimalen Bremswirkung präzise und auf einfache Weise eingestellt werden.

Die Reibkraft kann dabei auf unterschiedliche Weisen auf das Verpackungshüllenmaterial aufgebracht werden. So ist es beispielsweise möglich, dass das Verpackungshüllenmaterial sandwichartig zwischen dem ersten und dem zweiten Bremsring hindurchgeführt wird. Hierbei bilden also das erste Bremsmittel des ersten Bremsrings und das zweite Bremsmittel bzw. das zweite Gegenbremsmittel des zweiten Bremsrings einander gegen- überliegende Kontaktabschnitte bzw. Kontaktflächen, zwischen denen das Verpackungshüllenmaterial hindurchführbar ist. Zur Einstellung der gewünschten Reibkraft kann somit auf das Verpackungshüllenmaterial durch Verschieben des ersten Bremsrings eine veränderbare Linien- bzw. Flächenpressung auf einfache Weise ausgeübt werden.

In einer vorteilhaften Ausgestaltung ist das Bremsmittel des ersten Bremsrings durch eine zu seiner Mittenachse koaxiale und in Füllrichtung konisch sich verjüngende erste Bremsfläche gebildet. Dabei kann das Gegenbremsmittel des zweiten Bremsrings durch eine zu seiner Mittenachse koaxiale und in Füllrichtung sich konisch verjüngende zweite Bremsfläche gebildet. Hierbei ist es besonders vorteilhaft, wenn die Steigung der konischen zweiten Bremsfläche des zweiten Bremsrings zumindest annähernd der Steigung der konischen ersten Bremsfläche des ersten Bremsrings entspricht. Eine solche Ausgestaltung erlaubt es, entsprechend der Größe der Fläche eine im Vergleich zu der bekannten Lösung niedrigere aufzuwendende Kraft zu wählen und schont im Gegensatz zur bisher üblichen punkt- oder linienförmigen Krafteinleitung das Verpackungshüllenmaterial. Ebenso ist es möglich, dass der zweite Bremsring aus einem flexiblen bzw. reversibel elastischen Material hergestellt ist, so dass sich der Kontaktabschnitt des zweiten Bremsrings mit der Innenumfangsfläche des Verpackungshüllenmaterials bzw. der ersten Bremsfläche des ersten Bremsrings während der Einstellung der Bremskraft ausbilden kann. In einem solchen Fall besteht als einfachste Lösung zunächst die Möglichkeit, dass der zweite Bremsring mit der Innenumfangsfläche des Verpackungshüllenmaterials bzw. der ersten Bremsfläche des ersten Bremsrings nur eine Linienberührung eingeht. Dies ist insbesondere dann möglich, wenn der Fülldruck gering ist, so dass eine nur geringe Dichtwirkung notwendig ist. Ist jedoch der Fülldruck hoch, so wird durch Verschieben des ersten Bremsrings gegenüber dem zweiten Bremsring das flexible bzw. elastische Material des zweiten Bremsrings zusammen gedrückt, so dass sich an dem zweiten Bremsring ebenfalls eine konische bzw. konusförmige zweite Bremsfläche ausbildet. Diese wirkt mit der konischen ersten Bremsfläche des ersten Bremsrings zusammen.

Neben der vorstehend geschilderten Ausgestaltung, die Reibkraft durch sandwichartiges Hindurchführen des Verpackungshüllenmaterials zwischen dem ersten und dem zweiten Bremsring aufzubringen, besteht auch die Möglichkeit, die Reibkraft auf das Verpackungshüllenmaterial dadurch aufzubringen, dass das Verpackungshüllenmaterial entlang eines zumindest annähernd Z-förmigen Wegs zwischen dem ersten und dem zweiten Bremsring hindurchgeführt wird. Die Reibkraft auf das Verpackungshüllenmaterial entsteht dabei durch eine Veränderung der Größe der Auflagefläche des Verpackungshüllenmaterials auf den entsprechenden Flächen der Bremsringe in Folge einer Veränderung der Umschlingungswinkel des Verpackungshüllenmaterials um die betreffenden Abschnitte der Bremsringe. Diese Größenänderung wird ausschließlich durch die einfach zu steuernde Verschiebung des ersten Bremsrings gegenüber dem zweiten Bremsring erreicht.

Vorteilhafterweise besitzt hierzu der erste Bremsring an seinem Innenumfang einen ersten ein erstes Bremsmittel bildenden Bremsumlenkabschnitt für das Verpackungshüllenmaterial, an dem das Verpackungshüllenmaterial für die erste Umlenkung des zumindest annähernd Z-förmigen Wegs umlenkbar ist. Der zweite Bremsring kann dabei an seinem Außenumfang einen zweiten Gegenbremsumlenkabschnitt bzw. ein zweites Bremsmittel oder Gegenbremsmittel für das Verpackungshüllenmaterial aufweisen, an dem das Verpackungshüllenmaterial für die zweite Umlenkung des zumindest annähernd Z-förmigen Wegs umlenkbar ist. Durch das Verschieben des ersten Bremsrings kann dann der Verlauf des zumindest annähernd Z-förmigen Wegs des Verpackungshüllenmaterials und damit die Größe der Auflagefläche des Verpackungshüllenmaterials an den Umlenkungsabschnitten der Bremsringe in vorteilhafter Weise geändert werden.

Es ist dabei vorteilhaft, wenn der erste Bremsring eine Führungsfläche aufweist, entlang der das Verpackungshüllenmaterial vor dem Erreichen des ersten Umlenkabschnitts entlang führbar ist. Eine solche Führungsfläche glättet das zu einem Vorrat auf dem Füllrohr gefaltete Verpackungshüllenmaterial und verhindert so Faltenbildung im Verpackungshüllenmaterial im Bereich des Bremsrings beim Abziehen. Das ist von Bedeutung, da scharfkantige Faltungen im Verpackungshüllenmaterial zu Materialschäden führen können, die das herzustellende wurstförmige Produkt unbrauchbar machen, oder die zu einem Platzen der beschädigten Verpackungshülle führen können, was längere Ausfallzeiten zur Folge hat.

Die Position des Bremsrings auf dem Füllrohr hängt von verschiedenen Faktoren ab. Es ist möglich, dass der erste Bremsring in Füllrichtung stromaufwärts des zweiten Bremsrings oder auch stromabwärts des zweiten Bremsrings auf dem Füllrohr anordenbar ist. Wichtig für jede Anordnung ist aber, dass die Umlenkabschnitte der beiden Bremsringe einander zugewandt sind, um eine erfindungsgemäße Umlenkung zu gewährleisten.

Das Verschieben des ersten Bremsrings kann auf verschiedene Weisen realisiert werden. So kann die Verstellung von Hand oder auch motorisch erfolgen. In einer vorteilhaften Ausführung ist eine vorzugsweise motorische Antriebseinrichtung zum Verfahren des ersten Bremsrings vorgesehen. Eine solche Antriebseinrichtung lässt sich einfach in bekannter Weise ansteuern und gewährleistet eine präzise Einstellung der gewünschten Reibkraft. Dabei kann die Antriebseinheit elektrisch, pneumatisch oder hydraulisch betrieben werden.

Um ein ungewolltes Verschieben des ersten Bremsrings nach dem Einstellen der gewünschten Reibkraft zu verhindern, ist es sinnvoll diesen ersten Bremsring zu fixieren. Dazu ist es vorteilhaft, wenn eine Verriegelungseinrichtung zum Verriegeln des ersten Bremsrings in einer axialen Position vorgesehen ist.

In einer weiteren vorteilhaften Ausgestaltung ist eine Regeleinrichtung zum Aufrechterhalten der vorbestimmten Reibkraft vorgesehen. Diese kann beispielsweise Unregelmäßigkeiten in dem Verpackungshüllenmaterial, wie Änderungen in der Dicke oder der Oberflächenrauhigkeit, ausgleichen oder Schwankungen des Fülldrucks kompensieren.

Um ein Einströmen von Füllgut in den Zwischenraum zwischen dem Füllrohr und dem Vorrat an Verpackungshüllenmaterial zu verhindern, ist eine Dichteinrichtung vorgesehen.

Dabei bestehen verschiedene Möglichkeiten, die Dichteinrichtung anzuordnen. So kann die Dichteinrichtung durch den zweiten Bremsring selber gebildet sein. Mit anderen Worten wird die Funktion "Bremsen" und "Dichten" in einem Bauteil zusammengefasst. Hierbei ist der zweite Bremsring aus einem entsprechenden flexiblen bzw. elastischen Material hergestellt, welches sowohl eine reversible Verformung zur Erzielung der Dichtfunktion als auch eine ausreichende Festigkeit zur Erzielung der Bremsfunktion aufweist. Die Bremsfunktion wird dadurch erzielt, dass unabhängig von der Außenkontur des zweiten Bremsrings bzw. seiner geometrischen Gestaltung durch Heranschieben des ersten Bremsrings gegen den zweiten Bremsring die vorstehend bereits erwähnte Linien-bzw. Flächenpressung zwischen den beiden Bauteilen erzeugt wird. Wie bereits erwähnt, wird diese Flächenpressung bei dem zweiten Bremsring durch seine reversible Verformbarkeit erzielt.

Weiterhin kann die Dichteinrichtung getrennt von dem zweiten Bremsring vorgesehen sein. Mit anderen Worten, wird die Funktion "Dichten" und die Funktion "Bremsen" in zwei getrennt voneinander vorgesehenen Bauteilen verwirklicht. Dabei kann die Dichteinrichtung in Füllrichtung stromabwärts des zweiten Bremsrings beabstandet zu diesem anordenbar sein. So kann vorteilhaft verhindert werden, dass Füllgut in den Bereich zwischen den ersten und den zweiten Bremsring eintritt und die zu erzeugende Reibkraft beeinflusst.

Weiterhin ist es vorteilhaft, wenn der Außendurchmesser der Dichteinrichtung zumindest annähernd dem größten Außendurchmesser des zweiten Bremsrings entspricht.

Für die Dichteinrichtung selbst können die unterschiedlichsten Ausgestaltungen vorgesehen werden. So kann die Dichteinrichtung als Lippendichtung oder Topfdichtung ausgeführt sein.

Ist der Durchmesser der Lippendichtung zumindest in einem bestimmten Bereich einstellbar, lassen sich in besonders vorteilhafter Weise Unregelmäßigkeiten im Durchmesser des Verpackungshüllenmaterials ausgleichen, wie sie beispielsweise zwischen unterschiedlichen Produktionschargen auftreten können.

Hinsichtlich der Clipmaschine wird die vorstehende Aufgabe durch die Merkmale des Anspruchs 14 gelöst. Insbesondere wird eine Clipmaschine zum Herstellen von wurstförmigen Produkten, insbesondere Wurstprodukten, aus einem in ein schlauchförmiges Verpackungshüllenmaterial, wie beispielsweise einen Wurstdarm, füllbares viskoses oder granulares Füllgut, wie zum Beispiel ein Wurstbrät, vorgeschlagen, wobei die Clipmaschine ein Füllrohr zum Befüllen des schlauchförmigem Verpackungshüllenmaterials mit dem Füllgut in Füllrichtung, ein auf dem Füllrohr angeordneten Vorrat an Verpackungshüllenmaterial und eine Rückhaltevorrichtung zum Aufbringen einer vorbestimmten Reibkraft aufweist, die auf das in Füllrichtung abziehbare Verpackungshüllenmaterial entgegen der Füllrichtung einwirkt. Weiterhin ist vorgesehen, dass die Rückhaltevorrichtung einen Aufbau gemäß einem der Ansprüche 1 bis 13 besitzt.

Weitere vorteilhafte Ausgestaltungen sowie drei Ausführungsbeispiele der Erfindung werden nachstehend im Zusammenhang mit den beigefügten Zeichnungsfiguren näher erläutert. Die bei der Beschreibung der Ausführungsbeispiele verwendeten Begriffe "oben", "unten", "links" und "rechts" beziehen sich auf die Zeichnungsfiguren in einer Ausrichtung mit normal lesbaren Bezugszeichen und Figurenbezeichnungen.

### Es zeigen:

- Fig. 1: eine schematische Seitenansicht eines ersten Ausführungsbeispiels der erfindungsgemäßen Rückhaltevorrichtung mit einer Topfdichtung;
- Fig. 2: eine schematische Seitenansicht der erfindungsgemäßen Rückhaltevorrichtung gemäß Fig. 1 mit einer Lippendichtung;
- Fig. 3A, 3B: eine schematische Seitenansicht eines zweiten Ausführungsbeispiels der erfindungsgemäßen Rückhaltevorrichtung mit einer einstellbaren Lippendichtung sowie einem ersten Bremsring in einer ersten und in einer zweiten Bremsposition;
- Fig. 4A, 4B: eine schematische Seitenansicht des in den Fig. 3A und 3B gezeigten zweiten Ausführungsbeispiels der erfindungsgemäßen Rückhaltevorrichtung mit einer Topfdichtung sowie dem ersten Bremsring in einer ersten und zweiten Bremsposition;
- Fig. 5A, 5B: eine schematische Seitenansicht eines dritten Ausführungsbeispiels der erfindungsgemäßen Rückhaltevorrichtung mit einer einstellbaren Lippendichtung sowie einem ersten Bremsring in einer ersten und in einer zweiten Bremsposition; und
- Fig. 6A, 6B: eine schematische Seitenansicht eines dritten Ausführungsbeispiels der erfindungsgemäßen Rückhaltevorrichtung mit einer Topfdichtung sowie dem ersten Bremsring in einer ersten und in einer zweiten Bremsposition.

Die nachstehend beschriebenen Ausführungsbeispiele der erfindungsgemäßen Rückhaltevorrichtung kommen bei erfindungsgemäßen Clipmaschinen, insbesondere Wurstclipmaschinen, der eingangs genannten Art zum Einsatz. Diese dienen zum Herstellen von Wurstprodukten. Selbstverständlich kann die erfindungsgemäße Rückhaltevorrichtung auch bei Clipmaschinen eingesetzt werden, die zum Herstellen von wurstförmigen Produkten dienen, die keine Lebensmittel sind, sondern das Füllgut beispielsweise durch eine Dichtmasse oder einen Kleber gebildet wird.

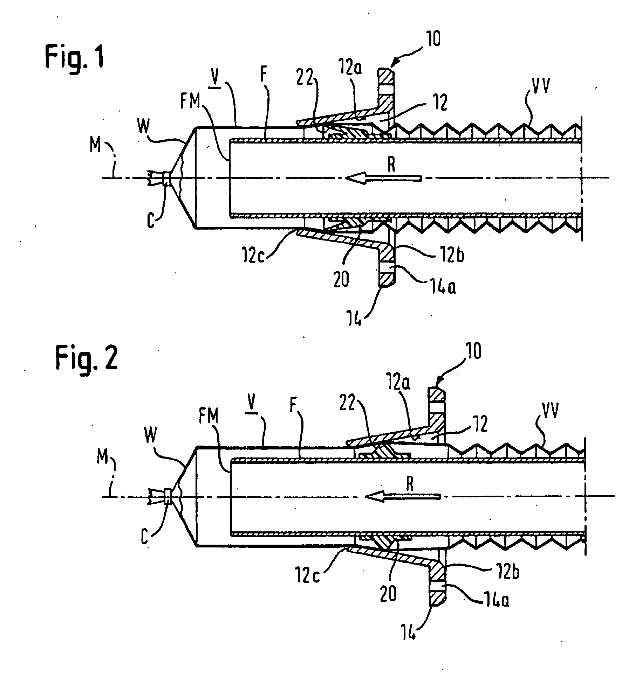

In den Fig. 1 und 2 ist eine schematische Seitenansicht einer ersten Ausführungsform der erfindungsgemäßen Rückhaltevorrichtung wiedergeben. Diese Rückhaltevorrichtung wird bei einer Clipmaschine eingesetzt, von der lediglich ein Füllrohr F gezeigt ist, mittels dem ein nicht weiter dargestelltes Füllgut, hier Wurstbrät, in Füllrichtung R, d.h. in horizontaler Richtung von rechts nach links, von einer ebenfalls nicht weiter dargestellten Füllmaschine einem herzustellenden Wurstprodukt W an der Füllrohrmündung FM zuführbar ist. Das Füllrohr F besitzt einen kreisringförmigen Querschnitt und ist vorzugsweise aus Edelstahl hergestellt.

Auf dem Füllrohr F ist konzentrisch zu dessen Mittellängsachse M ein Vorrat VV an schlauchförmigen Verpackungshüllenmaterial V, vorzugsweise aus Kunststoff, angeordnet, der sich von dem in den Fig. 1 und 2 noch dargestellten rechten Ende des Füllrohres F nach links erstreckt. Durch zick-zack-förmige Faltung des Verpackungshüllenmaterials V wird ein ausreichend großer Vorrat VV an diesem Material bereitgestellt, ohne dass hierfür viel Platz beansprucht wird. Der Vorrat VV an Verpackungshüllenmaterial V kann vor Beginn eines Füllvorgangs von Hand oder maschinell auf das Füllrohr F von der Füllrohrmündung FM aus aufgeschoben werden. Ebenso besteht die Möglichkeit, dass der Vorrat VV an Verpackungshüllenmaterial V während des Füllvorgang kontinuierlich oder diskontinuierlich aus einem Flachbahnmaterial, das zu einem Schlauch geformt und in dem Vorrat VV zwischengespeichert wird, hergestellt wird.

Wie aus den Fig. 1 und 2 ersichtlich ist, erstreckt sich das schlauchförmige Verpackungshüllenmaterial V von dem Vorrat VV konzentrisch zu der Mittellängsachse M des Füllrohrs F über die Füllrohrmündung FM hinaus. Links von der Füllrohrmündung FM ist der Endbereich des Verpackungshüllenmaterials V zu einem Zopf zusammengerafft und mittels eines von der Clipmaschine gesetzten Verschlussclips C füllgutdicht verschlossen. Dieses Ende des Verpackungshüllenmaterials V bildet das eine Ende des wurstförmigen Produkts W, das auch als den Wurstzipfel bezeichnet wird.

Stromaufwärts der Füllrohrmündung FM des Füllrohrs F, also entgegen der Füllrichtung R, ist die erfindungsgemäße Rückhaltevorrichtung auf dem Füllrohr F angeordnet. Diese besteht aus einem ersten Bremsring 10 sowie aus einem zweiten Bremsring 20. Sowohl der erste als auch der zweite Bremsring 10, 20 können aus Kunststoff oder aus Metall, vorzugsweise Edelstahl hergestellt sein.

Der erste Bremsring 10 ist koaxial zu der Mittellängsachse M des Füllrohrs F auf diesem und gegenüber dem Füllrohr F verfahr- bzw. verschiebbar angeordnet. Er weist eine Durchgangsbohrung 12 auf, die sich konus- bzw. kegelstumpfförmig in Füllrichtung R verjüngt. Durch die Durchgangsbohrung 12 wird das Verpackungshüllenmaterial V hindurchgeführt. Die ein erstes Bremsmittel bildende Innenumfangsfläche 12a der konusförmigen Durchgangsbohrung 12 ist gleichmäßig und eben ausgebildet, so dass eine Beschädigung des Verpackungshüllenmaterials V vermieden wird. Weiterhin ist sowohl der Durchmesser der rechten stirnseitigen Eintrittsöffnung 12b der Durchgangsbohrung 12 sowie deren linke Austrittsöffnung 12c deutlich größer als der Außendurchmesser des Füllrohres F.

Im Bereich der rechten Eintrittsöffnung 12b der Durchgangsbohrung 12 ist am Außenumfang 14 ein sich zumindest annähren im Wesentlichen in einem Winkel von 90° radial erstreckender und um die Eintrittsöffnung 12b vollständig umlaufender Flansch 14 einstückig angeformt. Dieser Flansch 14 dient dazu, den ersten Bremsring 10 von Hand oder motorisch in eine gewünschte Position parallel zu der Mittellängsachse M des Füllrohres F zu bewegen. Um eine Kraftübertragungsverbindung zwischen dem ersten Bremsring 10 und der nicht weiter dargestellten Betätigungseinrichtung zur ermöglichen, sind an dem Flansch 14 mehrere, in Umfangsrichtung des Flansches 14 in gleichmäßiger Teilung angeordnete Flanschbohrungen 14a vorgesehen, die sich alle im Wesentlichen parallel zu der Mittellängsachse M erstrecken.

Es ist noch zu erwähnen, dass, wie dies aus Fig. 1 entnehmbar ist, Kanten des ersten Bremsrings 10 gebrochen sind, um eine Beschädigung des Verpackungshüllenmaterials V beim Durchlauf durch den Bremsring 10 zu vermeiden.

Innerhalb des ersten Bremsrings 10 ist der zweite Bremsring 20 auf dem Füllrohr F ortsfest angeordnet, dessen axiale Länge kleiner ist als die des ersten Bremsrings 10. Der Innendurchmesser des zweiten Bremsrings 20 entspricht dem Außendurchmesser des Füllrohrs F. Zur ortsfesten Anbringung kann der zweite Bremsring 20 auf dem Füllrohr F durch beispielsweise eine Klemmpassung gehalten sein.

Über das Füllrohr F sowie den Bremsring 20 ist das schlauchförmige Verpackungshüllenmaterial V gezogen, das, wie bereits erwähnt, stromabwärts der Füllrohrmündung FM des Füllrohrs F durch einen Clip C verschlossen ist und stromaufwärts der erfindungsgemäßen Rückhaltevorrichtung den Vorrat VV bildet, von dem während des Produktionsvorgangs Verpackungshüllenmaterial V abgezogen werden kann. Die Außendurchmesser des Bremsrings 20 entsprechen zumindest annähernd dem Innendurchmesser des schlauchförmigen Verpackungshüllenmaterials V. Dadurch liegt das schlauchförmige Verpackungshüllenmaterial V unter leichter Spannung an dem Bremsring 20 an. Wie aus den Fig. 1 und 2 weiterhin ersichtlich ist, ist das Verpackungshüllenmaterial V sandwichartig zwischen der Außenkontur des zweiten Bremsrings 20 und der Innenkontur des ersten Bremsrings 10 aufgenommen. Wie dies nachstehend noch näher erläutert wird, dient der zweite Bremsring 20 gleichzeitig zur Abdichtung, so dass kein Füllgut in den von dem Füllrohr F und dem Vorrat VV an Verpackungshüllenmaterial V gebildete Zwischenraum eindringen kann.

Da, wie in den Fig. 1 und 2 dargestellt, der größte Innendurchmesser der konischen Durchgangsbohrung 12 des ersten Bremsrings 10 größer ist als der größte Außendurchmesser des zweiten Bremsrings 20, umschließt der erste Bremsring 10 auch den zweiten Bremsring 20. Da der kleinste Durchmesser der konischen Durchgangsbohrung 12 aber kleiner ist als der kleinste Außendurchmesser des zweiten Bremsrings 20, kann der erste Bremsring 10 nicht völlig über den zweiten Bremsring 20 hinweg bewegt werden.

Der zweite Bremsring 20 kann unterschiedlich geformt sein. Bei der in Fig. 1 im axialen Querschnitt wiedergegebenen Ausführungsform des zweiten Bremsrings 20 ist dieser in Form einer Lippendichtung ausgebildet. Wie bereits vorstehend erwähnt worden ist, dient diese Ausgestaltung dazu, die Funktion "Bremsen" und die Funktion "Dichten" zusammenzufassen. Insbesondere weist der zweite Bremsring 20 eine in Fig. 1 von rechts nach links nach schräg oben verlaufende, ein zweites Bremsmittel bzw. ein zweites Gegenbremsmittel bildende Lippe 22 auf, an der das Verpackungshüllenmaterial V außen vorbei läuft. Wie weiterhin aus Fig. 1 ersichtlich ist, liegt die Lippe 22 an der Innenumfangsfläche 12a des ersten Bremsrings 10 an. Wird der erste Bremsring 10 nach rechts, d.h. entgegen der Füllrichtung R verschoben, so wird durch die konusförmige Innendurchgangsbohrung 12 bzw. deren Innenumfangsfläche 12a die Lippe 22 in Richtung der Mittellängsachse M des Füllrohres F nach unten gebogen. Damit gelangt nicht nur die Spitze der Lippe 22 in Anlage an die Innenumfangsfläche 12a bzw. an die Innenumfangsfläche des Verpackungshüllenmaterials V, welches zwischen dem ersten Bremsring 10 und dem zweiten Bremsring 20 hindurchgeführt wird, sondern bildet eine Fläche aus, mit der das Verpackungshüllenmaterial V gegen die Innenumfangsfläche 12a des ersten Bremsrings 10 gedrückt wird. Grundsätzlich ist es aber möglich, das lediglich eine Linienberührung zwischen der Spitze der Lippe 22 und der Innenumfangsfläche des Verpackungshüllenmaterials V bzw. der Innenumfangsfläche 12a des ersten Bremsrings 12 vorhanden ist. Ist der Fülldruck entsprechend gering, kann diese Linienberührung zwischen dem zweiten Bremsring 20 und dem ersten Bremsring 10 und dem dazwischen aufgenommenen Verpackungshüllematerial V ausreichend sein.

Bei der in Fig. 2 gezeigten Ausgestaltung des zweiten Bremsrings 20 weist dieser im axialen Querschnitt der Fig. 2 die Form eines Dreiecks auf. Die Spitze 22 des Dreiecks kann dabei als echte Spitze ausgestaltet sein, oder aber, wie es in Fig. 2 gezeigt ist, abgeflacht sein. In beiden Fällen weist die Spitze 22 nach radial außen. Wie bei dem Ausführungsbeispiel des zweiten Bremsrings gemäß Fig. 1 ist das Verpackungshüllenmaterial zwischen der Dreiecksspitze 22 des zweiten Bremsrings 20 und der Innenumfangsfläche 12a des ersten Bremsrings 10 hindurch geführt. Wird der erste Bremsring 10 von links nach rechts verschoben, so drückt in Folge der konusförmigen Durchgangsbohrung 12 die Innenumfangsfläche 12a dieser Bohrung 12 die Spitze 22 des zweiten Bremsrings 20 zusammen, so dass eine flächige Anlage dieser Spitze 22 an der Innenumfangsfläche des Verpackungshüllenmaterials V bzw. der Innenumfangsfläche 12a des ersten Bremsrings 12 erfolgt. Ebenso wie bei dem Ausführungsbeispiel gemäß Fig. 1 kann aber bei einem entsprechend geringen Druck auch eine reine Linienberührung zwischen der Spitze 22 des dreiecksförmigen Bremsrings 20 und der Innenumfangsfläche des Verpackungshüllenmaterials V bzw. der Innenumfangsfläche 12a des ersten Bremsrings 10 genügen.

Für das Material des zweiten Bremsrings 20 können unterschiedliche Werkstoffe gewählt werden. Um seine Doppelfunktion hinsichtlich des Dichtens und Bremsens erfüllen zu können, sollte das Material des zweiten Bremsrings 20 zum Einen flexibel bzw. elastisch reversibel verformbar sein, aber eine hinreichende Festigkeit aufweisen, um bei entsprechender Linien- bzw. Flächenpressung der Lippe 22 bzw. der Dreiecksspitze 22 des zweiten Bremsrings 20 und der Innenumfangsfläche des Verpackungshüllenmaterials V bzw. der Innenumfangsfläche 12a des ersten Bremsrings 10 eine ausreichende Bremskraft und eine ausreichende Dichtwirkung zu erzielen.

Abschließend ist noch zu erwähnen, dass der erste Bremsring 10 selbstverständlich auch in einer Anordnung um 180 ° gedreht um eine die Mittellängsachse M senkrecht schneidende Drehachse vorgesehen sein kann. Mit anderen Worten ist der erste Bremsring 10 in den Fig. 1 und 2 um 180 ° gedreht in der Zeichnungsebene dieser beiden Figuren angeordnet.

In Abhängigkeit des Fülldrucks und/oder der gewählten Materialart für das Verpackungshüllenmaterial V wird vor dem Start eines Füllvorgangs eine gewünschte Reib- bzw. Bremskraft der Rückhaltevorrichtung eingestellt. Dies geschieht entsprechend dem Ausführungsbeispielen nach Fig. 1 oder Fig. 2 durch axiales Verschieben des Bremsrings 10. Wird der erste Bremsring 10 weiter in Richtung des zweiten Bremsrings 20 verschoben, d.h. also entgegen der Füllrichtung R bewegen sich die Kontaktabschnitte der Bremsringe 10, 20, d.h. die Innenumfangsfläche 12a des ersten Bremsrings 10 und die Lippe bzw. die Dreiecksspitze 22 des zweiten Bremsrings 20 bzw. die in Folge der Elastizität des Materials des zweiten Bremsrings 20 daraus entstehenden Flächen weiter aufeinander zu. Dadurch erhöht sich die zwischen den Kontaktabschnitten 12a, 22 entstehende Linien- bzw. Flächenpressung und damit die Linien- bzw. Flächenpressung auf das Verpackungshüllenmaterial V, das, wie in den Fig. 1 und 2 gezeigt, zwischen den beiden Flächen 12a, 22 sandwichartig aufgenommen ist. Als Folge hiervon erhöht sich die Reibkraft zwischen dem Verpackungshüllenmaterial V und den Bremsringen 10, 20 beim Abziehen des Verpackungshüllenmaterial V vom Vorrat auf dem Füllrohr F in Folge des auf das Verpackungshüllenmaterials V einwirkenden Fülldrucks, wodurch auch der Abzugswiderstand des Verpackungshüllenmaterials V bzw. die Bremskraft steigt.

Ein erhöhter Widerstand beim Abziehen des Verpackungshüllenmaterials V während des Befüllens eines Wurstprodukts W kann gewünscht sein, wenn beispielsweise mit hohem Fülldruck gearbeitet wird und über die eingestellte Reibung die Abzugsgeschwindigkeit des Verpackungshüllenmaterials V begrenzt werden soll. Eine erhöhte Reibung kann ebenfalls bei sehr steifen Verpackungshüllenmaterial V gewünscht sein, um ein faltenfreies Abziehen zu gewährleisten.

Wird der Bremsring 10 dagegen stromabwärts in Füllrichtung R axial verschoben, erweitert sich der Spalt zwischen den Kontaktabschnitten 12a, 22 der Bremsringe 10, 20 und die Linien- bzw. Flächenpressung zwischen den Kontaktabschnitten 12a, 22 nimmt ab. Infolge dessen sinkt auch die Bremskraft auf das Verpackungshüllenmaterial V. Das kann beispielsweise vorteilhaft sein, wenn mit niedrigerem Druck gefüllt oder weicheres Verpackungshüllenmaterial V verwendet werden soll.

Wie aus der vorstehenden Beschreibung der Funktionsweise der Rückhaltevorrichtung ersichtlich wird, ist es vorteilhaft, wenn die Kontaktabschnitte 12a, 22 die gleiche Steigung aufweisen. Eine Veränderung der Steigung sollte also vorzugsweise beide Kontaktabschnitte 12a, 22 gleich betreffen, was aber bei einer Ausgestaltung des zweiten Bremsrings 20 aus einem elastischen bzw. flexiblen Material gewährleistet ist. Eine Veränderung der Steigung der konische Fläche 12a des ersten Bremsrings 10 ermöglicht eine Variierung der Abstimmungsfeinheit bei der Einstellung der Reib- bzw. Bremskraft. Wird eine flachere Steigung gewählt, so muss der Bremsring 10 um einen längeren Weg verschoben werden, um die gleiche Flächenpressung zu erreichen, wie bei einer größeren Steigung. Hierdurch wird eine feinere Abstufung, also eine höhere Genauigkeit, bei der Einstellung einer gewünschten Flächenpressung, und damit einer gewünschten Reib- bzw. Bremskraft, erreicht. Wird dagegen die Steigung der konischen Flächen erhöht, nimmt die Einstellungsgenauigkeit ab.

Wie aus den Fig. 1 und 2 zu entnehmen ist, ist die Innenumfangsfläche 12a der konusförmigen Durchgangsbohrung 12 mit ihrem kleinern Innendurchmesser in Richtung der Füllrohrmündung FM bzw. in Füllrichtung R ausgerichtet. Selbstverständlich kann der erste Bremsring 10 auch so angeordnet werden, dass der kleinere Innendurchmesser entgegen der Füllrichtung R ausgerichtet ist. Mit anderen Worten ist der erste Bremsring 10 dann um 180° in der Zeicheneben der Fig. 1 und 2 gedreht. Eine solche Anordnung kann je nach verwendeter Ansteuerung des ersten Bremsrings 10 vorteilhaft sein. Es ist aber zu beachten, dass bei einem zu großen Führungsspiel des Bremsrings 10 durch den Abzug von Verpackungshüllenmaterial V eine Selbsthemmung, und damit eine zu starke Bremswirkung, durch Mitziehen des ersten Bremsrings 10 in Füllrichtung R, also in Bremsrichtung, auftreten kann.

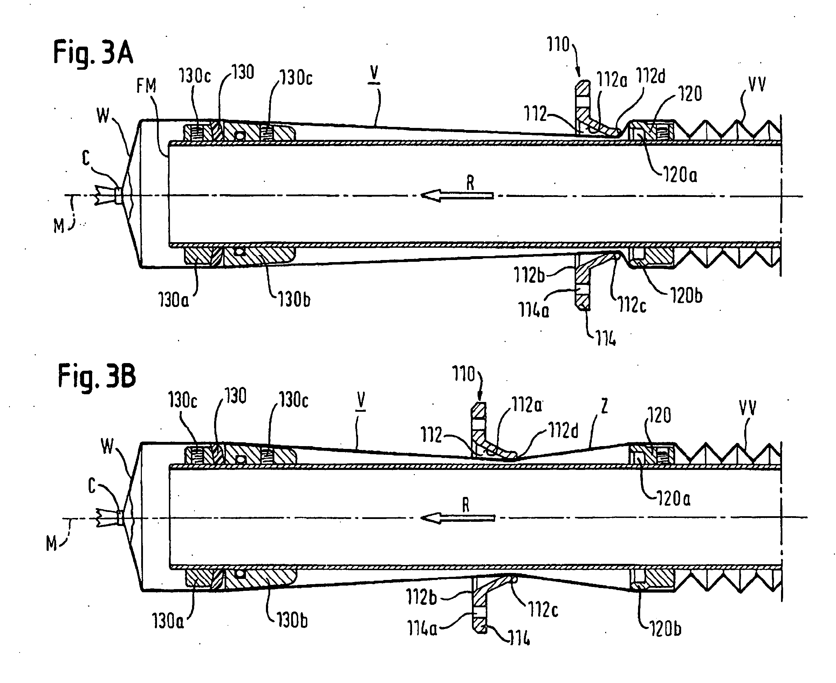

In den Fig. 3A bis 6B sind weitere vorteilhafte Ausgestaltungen der erfindungsgemäßen Rückhaltevorrichtung sowie der erfindungsgemäßen Clipmaschine gezeigt, die nachstehend erläutert werden. Hierbei werden lediglich die Unterschiede zu den beiden Ausführungsbeispielen gemäß den Fig. 1 und 2 näher beschrieben. Darüber hinaus werden dabei bau- und/oder funktionsgleiche Bauteile mit gleichen Bezugszeichen wie bei den Ausführungsbeispielen gemäß den Fig. 1 und 2, jeweils erhöht um 100, verwendet.

Wie dem Ausführungsbeispiel in den Fig. 3A und 3B zu entnehmen ist, weist die Clipmaschine ebenfalls ein Füllrohr F mit einem kreisrunden Querschnitt auf. Ebenso, wie im vorgehend beschriebenen Ausführungsbeispiel, erstreckt sich das schlauchförmige Verpackungshüllenmaterial V von dem Vorrat VV konzentrisch zu der Mittellängsachse M des Füllrohrs F über die Füllrohrmündung FM hinaus. Links von der Füllrohrmündung FM ist der Endbereich des Verpackungshüllenmaterials V zu einem Zopf zusammengerafft und mittels eines von der Clipmaschine gesetzten Verschlussclips C füllgutdicht verschlossen.

Stromaufwärts der Füllrohrmündung FM des Füllrohrs F, also entgegen der Füllrichtung R, ist auf dem Füllrohr F die erfindungsgemäße Rückhaltevorrichtung angeordnet. Diese besteht im vorliegenden Ausführungsbeispiel aus einem ersten Bremsring 110 sowie aus einem zweiten Bremsring 120. Sowohl der erste als auch der zweite Bremsring 110, 120 können aus Kunststoff oder aus Metall, vorzugsweise Edelstahl hergestellt sein. Zusätzlich zur Rückhaltevorrichtung und stromabwärts zu ihr ist eine Dichteinrichtung 130, vorzugsweise hergestellt aus einem Elastomer, in der Nähe der Füllrohrmündung FM angeordnet.

Der erste Bremsring 110 ist koaxial zu der Mittellängsachse M des Füllrohrs F auf diesem und gegenüber dem Füllrohr F verfahr- bzw. verschiebbar angeordnet. Er weist eine Durchgangsbohrung 112 auf, die sich konus- bzw. kegelstumpfförmig entgegen der Füllrichtung R verjüngt. Die Innenumfangsfläche 112a der konusförmigen Durchgangsbohrung 112 ist gleichmäßig und eben ausgebildet. Der Durchmesser der linken Austritts- bzw. Durchtrittsöffnung 112b der konischen Durchgangsbohrung 112 ist deutlich größer als der Durchmesser des Füllrohrs F. Der Durchmesser der rechten Eintritts- bzw. Durchtrittsöffnung 112c entspricht dem Außendurchmesser des Füllrohrs F plus mindestens der Dicke des Verpackungshüllenmaterials V. Somit ist der Durchmesser der Durchtrittsöffnung 112c so groß, dass auf das Verpackungshüllenmaterial V beim Hindurchziehen zwischen dem ersten Bremsring 110 und dem Füllrohr F keine bremsende Reibkraft durch den ersten Bremsring 110 wirkt.

Im Bereich der linken Durchtrittsöffnung 112b der Durchgangsbohrung 112 ist am Außenumfang ein sich zumindest annährend im Wesentlichen in einem Winkel von 90° radial erstreckender und vollständig umlaufender Flansch 114 einstückig angeformt. Dieser Flansch 114 dient dazu, den ersten Bremsring 110 von Hand oder motorisch in eine gewünschte Position parallel zu der Mittellängsachse M des Füllrohres F zu bewegen. Um eine Kraftübertragungsverbindung zwischen dem ersten Bremsring 110 und der nicht weiter dargestellten Betätigungseinrichtung zur ermöglichen, sind an dem Flansch 114 mehrere, in Umfangsrichtung des Flansches 114 in gleichmäßiger Teilung angeordnete Flanschbohrungen 114a vorgesehen, die sich alle im Wesentlichen parallel zu der Mittellängsachse M erstrecken.

Weiter stromaufwärts des ersten Bremsrings 110 ist der zweite Bremsring 120 koaxial mit dem ersten Bremsring 110 und dem Füllrohr F auf diesem ortsfest angeordnet. Der zweite Bremsring 120 ist in diesem Ausführungsbeispiel als Formatring gestaltet. Das bedeutet, dass das vom gefalteten Vorrat VV an Verpackungshüllenmaterial V abgezogene Verpackungshüllenmaterial V über ihn hinweg gezogen und dabei geglättet wird. Der Formatring 120 kann ebenfalls aus Kunststoff oder Metall, vorzugsweise Edelstahl, gefertigt sein. Der Innendurchmesser des Formatrings 120 entspricht dem Außendurchmesser des Füllrohrs F. Zur ortsfesten Anbringung kann der Formatring 120 auf dem Füllrohr F durch beispielsweise eine Klemmpassung gehalten sein. Sein Außendurchmesser kann zumindest annähernd dem Innendurchmesser des schlauchförmigen Verpackungshüllenmaterials V entsprechen, kann aber auch kleiner sein. An seiner stromabwärts zu dem verschiebbaren ersten Bremsring 110 weisenden Seite besitzt der Formatring 120 eine innenliegende ringförmige Ausnehmung 120a, die in Richtung der Mittellängsachse M von der Oberfläche des Formatrings beabstandet, sich radial bis zum Füllrohr F erstreckt. In axialer Richtung erstreckt sich die Ausnehmung 120a von der linken, zum ersten Bremsring 110 weisenden, Vorderkante des Formatrings um etwa 1/3 der axialen Länge des Formatrings 120 nach rechts, also entgegen der Füllrichtung R. Dadurch wird eine axial von dem Formatring 120 abstehende Lippe 120b gebildet, die in Richtung des verschiebbaren ersten Bremsrings 110 gerichtet ist. Die Außenkante der axialen Lippe 120b hat im gezeigten Ausführungsbeispiel einen geringfügig größeren Durchmesser als der Formatring 120 selbst, weshalb das über ihn hinweggezogene schlauchförmige Verpackungshüllenmaterial V nur auf einer um den Formatring 120 umlaufenden Kreislinie am Formatring 120 anliegt. Hierdurch wird die zwischen dem Formatring 120 und dem schlauchförmigen Verpackungshüllenmaterial V auftretende Reibung bei faltenfreiem Abzug auf ein Minimum reduziert.

Stromabwärts der Rückhaltevorrichtung, d.h. in Füllrichtung R ist in der Nähe der Mündungsöffnung FM des Füllrohrs F ein die Dichteinrichtung bildender Dichtring 130 ortsfest auf dem Füllrohr F und koaxial dazu angebracht. Der Dichtring 130 ist in diesem Ausführungsbeispiel als Lippendichtung gestaltet, deren Außendurchmesser einstellbar ist. Eine solcher Dichtring 130 besteht üblicherweise aus einem geeigneten Elastomer. Sein Innendurchmesser entspricht dem Außendurchmesser des Füllrohrs F, sein Außendurchmesser entspricht etwa dem Innendurchmesser des Verpackungshüllenmaterials V, an dem er dann dichtend anliegt. Der Dichtring 130 liegt mit seinem Innendurchmesser am Füllrohr an und weist radial von diesem weg. Er ist in Füllrichtung R geneigte. Sein Querschnitt hat die Form eines Parallelogramms, jedoch verläuft die zum Füllrohr F weisende Seite parallel zu diesem. Die Umfangsfläche des Dichtrings 130 ist entgegen der Füllrichtung R geneigt.

Unmittelbar vor und hinter dem Dichtring 130 sind Einstellringe 130a, 130b angeordnet. Sie können aus Kunststoff oder Metall, bei Verwendung im Lebensmittelbereich vorzugsweise aus Edelstahl, gefertigt sein. Der Innendurchmesser des stromabwärts des Dichtrings 130 auf dem Füllrohr F angeordneten Einstellrings 130a entspricht dem Außendurchmesser des Füllrohrs F. Der Außendurchmesser seiner annähernd zylindrischen Umfangsfläche ist kleiner als der Außendurchmesser des Dichtrings 130. Der zweite Einstellring 130b ist stromaufwärts des Dichtrings 130 angeordnet. Sein Innendurchmesser entspricht dem des ersten Einstellrings 130a. Seine leicht konusförmige Mantelfläche ist stromaufwärts in Richtung der Rückhaltevorrichtung geneigt. Sein größter Außendurchmesser entspricht etwa dem Außendurchmesser des Dichtrings 130. Die axiale Länge des zweiten Einstellrings 130b entspricht etwa der doppelten axialen Länge des ersten Einstellrings 130a. Im vorliegenden Ausführungsbeispiel weisen beide Einstellringe 130a, 130b zur axialen Fixierung auf dem Füllrohr F und zur Einstellung des Durchmessers des Dichtrings 130 radiale Gewindebohrungen auf, in die Madenschrauben 130c eingedreht sind.

Das schlauchförmige Verpackungshüllenmaterial V ist über die auf dem Füllrohr F ortsfest angebrachten Formatring 120 und die Dichteinrichtung 130 gezogen und dabei zwischen dem Bremsring 110 und dem Füllrohr F entlang geführt. Das schlauchförmige Verpackungshüllenmaterial V bildet stromaufwärts des Formatrings 220 den Vorrat VV und ist stromabwärts der Mündungsöffnung FM des Füllrohrs F durch ein Verschlussmittel, wie einen Clip C, verschlossen.

Auch in dem Ausführungsbeispiel entsprechend Fig. 3A und 3B wird zur Veränderung des Abzugswiderstands des Verpackungshüllenmaterials V, beispielsweise zur Anpassung an einen gewählten Fülldruck oder das Verpackungshüllenmaterial V, der erste Bremsring 110 axial gegenüber dem zweiten Bremsring bzw. Formatring 120 verschoben.

Die Änderung des Abzugswiderstandes des Verpackungshüllenmaterials V basiert in diesem Ausführungsbeispiel auf der Änderung der Umlenkung des Verpackungshüllenmaterials V durch den Bremsring 110 und den Formatring 120. Zwischen dem Bremsring 110 und dem Formatring 120 wird das Verpackungshüllenmaterial V auf einem annähernd Z-förmigen Weg geführt, der entlang des Außenumfangs des Formatrings 120, dann annähernd radial in Richtung des Füllrohrs F und anschließend axial entlang des Füllrohrs F zwischen Füllrohr F und dem Innendurchmesser des ersten Bremsrings 110 verläuft. Das Verpackungshüllenmaterial V passiert dabei die Umlenkungsabschnitte, die am Formatring 120 durch die Lippe 120b und am ersten Bremsring 110 durch den äußeren Rand 112d der Durchtrittsöffnung 112c gebildet werden. Hierbei bildet der äußere Rand 112d ein erstes Bremsmittel des ersten Bremsrings 110, wogegen die Lippe 120b das zweite Bremsmittel bzw. das zweite Gegenbremsmittel des zweiten Bremsrings bzw. des Formatrings 120 bildet.

Um den Abzugswiderstand des Verpackungshüllenmaterials V zu erhöhen, kann der erste Bremsring 110 axial in Richtung des Formatrings 120 verschoben werden, wie dies in Fig. 3A gezeigt ist. Dabei nimmt die Umlenkung des auf einem annähernd Z-förmigen Weg Z geführte Verpackungshüllenmaterial V an den Umlenkabschnitten 112d, 120b des Bremsrings 110 und des Formatrings 120 zu. Die zunehmende Umlenkung des Verpackungshüllenmaterials V hat zur Folge, dass die Umlenkabschnitte 112d, 120b von dem Verpackungshüllenmaterial V stärker umschlungen werden, d.h., die Auflagefläche des Verpackungshüllenmaterials V auf den Umlenkabschnitten 112d, 120b erhöht sich. Durch die erhöhte Auflagefläche des Verpackungshüllenmaterials V auf den Umlenkabschnitten 112d, 120b erhöht sich auch die Reibung zwischen den Auflageflächen an den Umlenkabschnitten 112d, 120b des Bremsrings 110 und des Formatrings 120 und dem Verpackungshüllenmaterial V, wodurch der Abzugswiderstand des Verpackungshüllenmaterials V steigt.

Wird der Bremsring 110 dagegen vom Formatring 120 wegbewegt, d.h. in Füllrichtung, wie in Fig. 3B gezeigt, verringert sich die Faltung des schlauchförmigen Verpackungshüllenmaterials V zwischen dem Formatring 120 und dem Bremsring 110. Dadurch verringert sich die Auflagefläche des Verpackungshüllenmaterials V auf den Umlenkabschnitten 112d, 120b und ebenso die Reibung zwischen den Auflageflächen an den Umlenkabschnitten 112d, 120b des Bremsrings110 und des Formatrings 120 und dem Verpackungshüllenmaterial V. Infolge dessen sinkt auch der Abzugswiderstand des Verpackungshüllenmaterials V.

In den dargestellten Ausführungsbeispielen ist das Verpackungshüllenmaterial V zwischen dem Formatring 120 und dem Bremsring 110 um jeweils maximal ca. 90° umgelenkt. Es ist aber auch möglich, die ringförmige Ausnehmung 120a des Formatrings 120 so zu gestalten, dass der Umlenkabschnitt 112d des Bremsrings 110 in die ringförmige Ausnehmung 120a eintauchen kann. Das hätte eine noch stärkere Faltung des Verpackungshüllenmaterials V und eine weitere Erhöhung der Auflagefläche des Verpackungshüllenmaterials V auf den Umlenkabschnitten 112d, 120b zur Folge, wodurch sich der Abzugswiderstand weiter erhöhen würde.

Die stromabwärts der Rückhalteeinrichtung auf dem Füllrohr F angeordnete Dichteinrichtung 130 ist, wie bereits erwähnt, als Lippendichtung mit einstellbarem Außendurchmesser ausgeführt. Zur Einstellung des Durchmessers kann die Neigung der Lippe so verändert werden, dass sich am äußeren Rand der Dichtlippe des Dichtringes bzw. der Dichteinrichtung 130 ein gewünschter Durchmesser einstellt. Dies geschieht, indem die Position der Einstellringe 130a, 130b verändert wird. Die Neigung der Lippendichtung 130 wird, wie aus Fig. 3A zu erkennen ist, durch axiales Aufeinanderzubewegen der Einstellringe 130a, 130b entlang des Füllrohrs F verringert. Dadurch vergrößert sich der Außendurchmesser der Dichtlippe des Dichtrings 130. Durch axiales Voneinanderwegbewegen der Einstellringe 130a, 130b verringert sich der Außendurchmesser der Lippendichtung 130 durch Zunahme der Neigung der Dichtlippe bei konstant bleibendem Innendurchmesser. Die Durchmessereinstellung kann verständlicherweise nur in einem dem Material und der Größe des Dichtrings 130 entsprechenden Rahmen ausgeführt werden. Alternativ zum Verschieben beider Einstellringe 130a, 130b auf dem Füllrohr F kann einer der Einstellringe 130a, 130b fixiert bleiben und der jeweils andere Einstellring 130b, 130a wird in die gewünschte Richtung verschoben. Es ist aber auch denkbar, eine Durchmesserveränderung durch Austausch des Dichtrings 130 oder eine Kombination von Austausch und Einstellung zu realisieren. Als Materialien für die Einstellringe 130a, 130b können, je nach Stabilitätsanforderungen, sowohl Metalle, dann vorzugsweise Edelstahl, wie auch Kunststoffe eingesetzt werden. Zur Befestigung der Einstellringe 130a, 130b auf dem Füllrohr F können diese radiale Gewindebohrungen aufweisen, in die z.B. Madenschrauben 130c eingeschraubt werden können. Es ist aber auch möglich, einen der Einstellringe 130a, 130b durch beispielsweise eine Presspassung zu fixieren und den jeweils andern Einstellring 130a, 130b verstellbar zu befestigen.

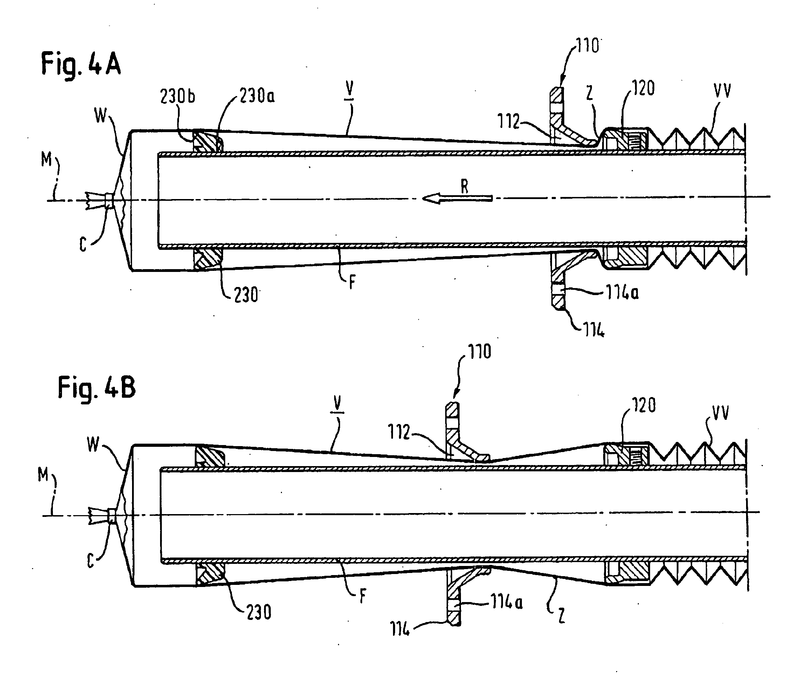

Die Fig. 4A und 4B zeigen das gleiche Ausführungsbeispiel der erfindungsgemäßen Rückhaltevorrichtung, wie die Fig. 3A und 3B, weshalb auf deren Aufbau und Funktion hier nicht eingegangen werden soll. Im Unterschied dazu ist aber die Dichteinrichtung 230 der in den Fig. 4A und 4B gezeigten Ausführungsform durch eine Topfdichtung realisiert. Diese ist, wie auch die Lippendichtung 130, stromabwärts der Rückhaltevorrichtung ortsfest auf dem Füllrohr F angebracht. Der Durchmesser der zylindrischen Innenfläche 230a der Topfdichtung entspricht dem Außendurchmesser des Füllrohrs F. Hiervon steht radial und in Füllrichtung R geneigt eine Lippe 230b ab. Der Außendurchmesser der Topfdichtung wird durch den Außenrand der Lippe 230b gebildet und ist üblicherweise geringfügig größer, als der Innendurchmesser des Verpackungshüllenmaterials V. Dadurch liegt dieses mit leichter Spannung auf dem Außendurchmesser der Topfdichtung 230 dichtend an. Die Topfdichtung 230 hat im Gegensatz zur Lippendichtung 130 einen festgelegten Außendurchmesser. Die Topfdichtung 230 kann durch eine entsprechende Passung oder durch beispielsweise Aufvulkanisieren auf dem Füllrohr fixiert sein.

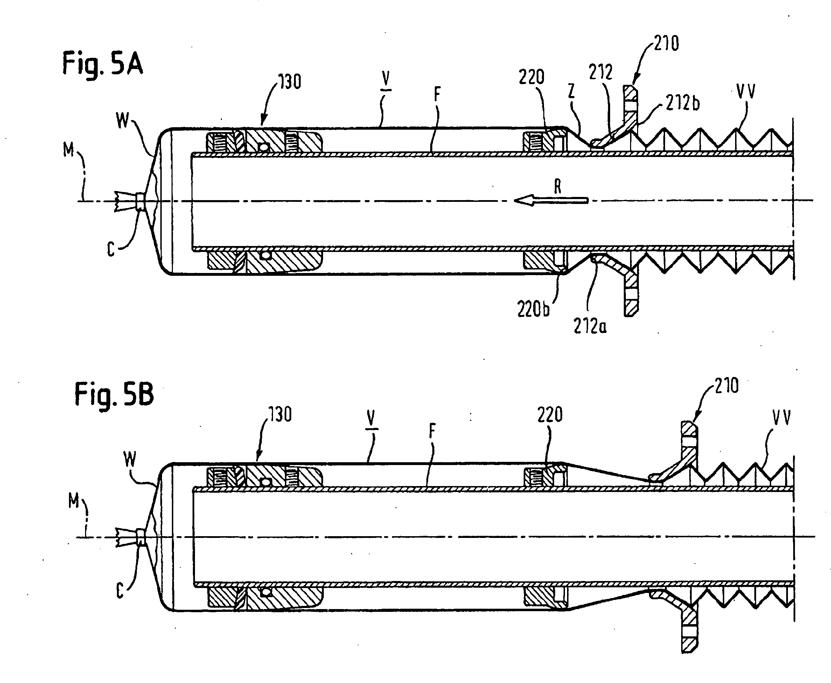

Die Rückhaltevorrichtung entsprechend dem in Fig. 5A dargestellten Ausführungsbeispiel entspricht im Wesentlichen dem der Rückhaltevorrichtung der Fig. 3A bis 4B. Der wesentliche Unterschied besteht in der Ausrichtung des ersten Bremsrings 210 und des zweiten Bremsrings bzw. Formatrings 220.

Der erste Bremsring 210 ist koaxial um das Füllrohr F herum angeordnet. Er hat den gleichen Aufbau, wie der erste Bremsring 110 der Ausführungsbeispiele entsprechend der Fig. 3A bis 4B. Jedoch ist der erste Bremsring 210 um 180° um eine senkrecht zur Mittellinie M verlaufende Achse gedreht. Das bedeutet, dass sich die konische Durchgangsöffnung 212 des ersten Bremsrings 210 entgegen der Füllrichtung R verjüngt. Da der Formatring 220 stromabwärts des ersten Bremsrings 210 angeordnet ist, grenzt die größere Durchtrittsöffnung 212b der konischen Durchgangsbohrung 212, die bei dem Ausführungsbeispiel gemäß den Fig. 3A bis 4B die Austrittsöffnung gebildet hat und nunmehr die Eintrittsöffnung für das Verpackungshüllenmaterial V ist, direkt an den auf dem Füllrohr F gespeicherten Vorrat VV an Verpackungshüllenmaterials V und glättet das gefaltete Verpackungshüllenmaterials V beim Abziehen vom Vorrat VV.

Der Formatring 220 ist, wie bereits erwähnt, stromabwärts des ersten Bremsrings 210 ebenfalls koaxial um das Füllrohr F herum angeordnet. Auch der Formatring 220 ist im Vergleich zum Formatring 120 der Fig. 3A bis 4B um 180° um eine senkrecht zur Mittellinie M verlaufende Achse gedreht. Daher zeigt die axial abstehende Lippe stromaufwärts entgegen der Füllrichtung R.

Aus dem beschriebenen Aufbau geht hervor, dass auch in diesem Ausführungsbeispiel die Umlenkabschnitte 212d, 220b einander zugewandt sind. Der Z-förmige Verlauf des Abzugsweges für das Verpackungshüllenmaterial V verläuft hier zunächst vom Vorrat VV an Verpackungshüllenmaterial V entlang des Füllrohrs F zwischen diesem und der Durchtrittsöffnung 212 entlang des Umlenkabschnitts 212d, dann annähernd radial vom Füllrohr F weg zum Umlenkabschnitt 220b des Formatrings 220 und über dessen Außenumfang.

Die Funktionsweise dieser Ausführung der erfindungsgemäßen Rückhaltevorrichtung entspricht ebenfalls der in Fig 3A bis 4B beschriebenen. Auch hier wird in gleicher Weise durch axiales Verfahren des ersten Bremsrings 210 gegenüber dem Formatring 220 die Umlenkung des Verpackungshüllenmaterials V verändert, was eine Änderung des Abzugswiderstandes des Verpackungshüllenmaterials zur Folge hat.

Wie in Fig. 5A und 5B weiter zu sehen ist, ist stromabwärts der Rückhalteeinrichtung eine Dichteinrichtung 130 koaxial um das Füllrohr angeordnet. Diese entspricht in Aufbau und Funktion exakt der zu Fig. 3A und 3B beschriebenen einstellbaren Lippendichtung 130.

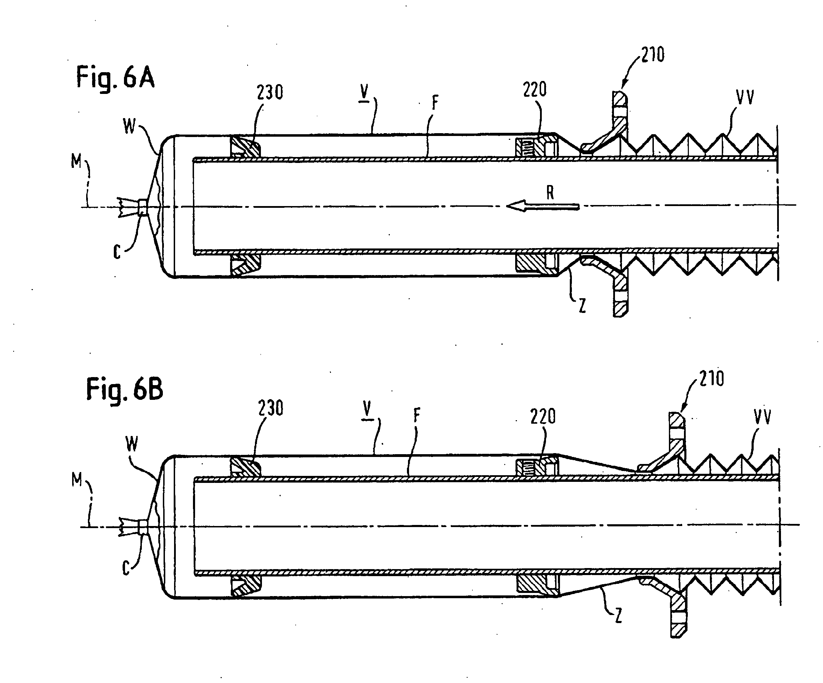

Fig. 6A und 6B zeigen die Rückhaltevorrichtung der Fig. 5A und 5B. Im Gegensatz zu den Fig. 5A und 5B ist in der Vorrichtung der Fig. 6A und 6B eine Topfdichtung 230 anstelle der Lippendichtung 130 vorgesehen. Der Aufbau und die Funktion der Topfdichtung 230 entsprechen in identische Weise dem der zu den Fig. 4A und 4B beschriebenen.

Die Einstellung einer gewünschten Rückhaltekraft geschieht, wie vorstehend beschrieben, durch axiales Verschieben des ersten Bremsrings 10, 110, 210 gegenüber dem zweiten Bremsring 20, 120, 220. Diese Verschiebung kann manuell oder motorisch, beispielsweise über bekannte Kurbeltriebe geschehen oder auch hydraulische oder pneumatische Zylinder.

Der erste Bremsring 10, 110, 210 kann ebenso eine größere als die dargestellte Breite haben. In diesem Fall kann die konusförmige Durchgangsöffnung 12, 112 durch eine Bohrung ohne den dargestellten axial abstehenden Rand realisiert werden.

Weiterhin ist es möglich, die Bremswirkung des ersten Bremsrings 10, 110, zusätzlich zur Steuerung der Bewegung, durch die Wahl des Materials und damit der Flexibilität des von dem ersten Bremsring 10, 110 abstehenden Randes zu beeinflussen.

Wie aus dem Vorstehenden hervorgeht, ist der auf dem Füllrohr F ortsfest anbringbare zweite Bremsring 20, 120, 220 und der ebenfalls auf dem Füllrohr F ortsfest anbringbare Dichtring 30, 130, 230 Teil der erfindungsgemäßen Vorrichtung. Selbstverständlich kann der zweite Bremsring 20, 120, 220 bereits bei der Herstellung des Füllrohrs F zusammen mit diesem hergestellt werden. Ebenso kann auch der Dichtring 30, 130, 230 bereits bei der Herstellung des Füllrohrs F auf diesem angebracht werden. Bei einem Wechsel des Durchmessers des schlauchförmigen Verpackungshüllenmaterials V muss dann der Füllrohrabschnitt mit der erfindungsgemäßen Rückhaltevorrichtung gewechselt werden.

### Bezugszeichenliste

- C: Clip
- F: Füllrohr
- FM: Füllrohrmündung
- M: Achse des Füllrohrs
- R: Füllrichtung
- V: Verpackungshüllenmaterial
- VV: Vorrat an Verpackungshüllenmaterial
- W: einseitig verschlossene Verpackungshülle
- Z: Z-förmiger Umlenkweg
- 10,110,210: erster Bremsring
- 12,112: konische Durchgangsöffnung / konische Innenfläche
- 12a 112a: konische Innenfläche
- 12b,112b: Eintrittsöffnung
- 12c,112c: Austrittsöffnung
- 14,114: Flansch
- 14a,114a: Bohrungen
- 20,120,220: zweiter Bremsring / Formatring
- 22: Lippe / Dreiecksspitze
- 22a,22b: Seitenflächen des zweiten Bremsrings
- 30,130,230: Dichteinrichtung
- 112d,212d,120b,220b: Umlenkabschnitt
- 120a: Ausnehmung
- 130a: erster Einstellring
- 130b: zweiter Einstellring
- 130c: Madenschrauben

## Patentansprüche

1. Rückhaltevorrichtung für ein schlauchförmiges Verpackungshüllenmaterial (V) zur Aufnahme eines viskosen oder granularen Füllguts in einer Verpackungsmaschine, insbesondere einer Clipmaschine, die ein Füllrohr (F) zum Befüllen des schlauchförmigem Verpackungshüllenmaterials (V) mit dem Füllgut aufweist, wobei die Rückhaltevorrichtung enthält: einen koaxial auf das Füllrohr (F) aufsetzbaren ersten Bremsring (10; 110, 210), dessen Innendurchmesser größer ist als der Außendurchmesser des Füllrohrs (F) und an dessen Innenumfang ein erstes Bremsmittel (12, 112) vorgesehen ist, an dem das Verpackungshüllenmaterial (V) in Füllrichtung (R) des Füllguts entgegen einer auf das Verpackungshüllenmaterial (V) einwirkenden Reibkraft entlang führbar ist, wobei
ein zweiter Bremsring (20, 120, 220) vorgesehen ist, der auf dem Füllrohr (F) ortsfest angeordnet ist und der an seinem Außenumfang ein Gegenbremsmittel (22, 120b) aufweist, wobei das Verpackungshüllenmaterial (V) zwischen dem ersten Bremsmittel (12, 112) des ersten Bremsrings (10, 110, 210) und dem Gegenbremsmittel (22, 120b) des zweiten Bremsrings (20, 120, 220) hindurchführbar ist und wobei der erste Bremsring (10, 110, 210) zur Einstellung einer vorbestimmten Reibkraft für das Verpackungshüllenmaterial (V) an dem ersten Bremsmittel (12, 112) des ersten Bremsrings (10; 110) und dem Gegenbremsmittel (22, 120b) des zweiten Bremsrings (20, 120, 220) in Füllrichtung (R) reversibel verschiebbar ist, **dadurch gekennzeichnet, dass** eine Dichteinrichtung (20, 130, 230) vorgesehen ist, die ortsfest auf dem Füllrohr (F) angeordnet ist und deren Außendurchmesser etwa dem Innendurchmesser des Verpackunghüllenmaterials (V) entspricht, an dem sie dann dichtend anliegt.

2. Rückhaltevorrichtung nach Anspruch 1,
**dadurch gekennzeichnet, dass** das Verpackungshüllenmaterial (V) sandwichartig zwischen dem ersten und dem zweiten Bremsring (10, 20) hindurchführbar ist.

3. Rückhaltevorrichtung nach Anspruch 1 oder 2,
**dadurch gekennzeichnet, dass** das Bremsmittel (12) des ersten Bremsrings (10) durch eine zu seiner Mittenachse (M) koaxiale und in Füllrichtung (R) konisch sich verjüngende erste Bremsfläche (12) gebildet ist, und dass das Gegenbremsmittel (22) des zweiten Bremsrings (20) durch eine zu seiner Mittenachse (M) koaxiale und in Füllrichtung (R) sich konisch verjüngende zweite Bremsfläche (22) gebildet ist.

4. Rückhaltevorrichtung nach Anspruch 3,
**dadurch gekennzeichnet, dass** die Steigung der konischen zweiten Bremsfläche (22) des zweiten Bremsrings (20) zumindest annähernd der Steigung der konischen ersten Bremsfläche (12) des ersten Bremsrings (10) entspricht.

5. Rückhaltevorrichtung nach Anspruch 4,
**dadurch gekennzeichnet, dass** der erste Bremsring (110, 210) an seinem Innenumfang einen ersten Bremsumlenkabschnitt (112d, 212d) für das Verpackungshüllenmaterial (V) aufweist, an dem das Verpackungshüllenmaterial (V) für die erste Umlenkung des zumindest annähernd Z-förmigen Wegs (Z) umlenkbar ist.

6. Rückhaltevorrichtung nach Anspruch 4 oder 5,
**dadurch gekennzeichnet, dass** der zweite Bremsring (120, 220) an seinem Außenumfang einen zweiten Gegenbremsumlenkabschnitt (120b, 220b) für das Verpackungshüllenmaterial (V) aufweist, an dem das Verpackungshüllenmaterial (V) für die zweite Umlenkung des zumindest annähernden Z-förmigen Wegs (Z) umlenkbar ist.

7. Rückhaltevorrichtung nach einem der Ansprüche 1 bis 6,
**dadurch gekennzeichnet, dass** eine vorzugsweise motorische Antriebseinrichtung zum Verfahren des ersten Bremsrings (10, 110, 210) vorgesehen ist.

8. Rückhaltevorrichtung nach einem der Ansprüche 1 bis 7,
**dadurch gekennzeichnet, dass** eine Verriegelungseinrichtung zum Verriegeln des ersten Bremsrings (10, 110, 210) in einer axialen Position vorgesehen ist.

9. Rückhaltevorrichtung nach einem der Ansprüche 1 bis 8,
**dadurch gekennzeichnet, dass** eine Regeleinrichtung zum Aufrechterhalten der vorbestimmten Reibkraft vorgesehen ist.

10. Rückhaltevorrichtung nach einem der Ansprüche 1 bis 9,
**dadurch gekennzeichnet, dass** der zweite Bremsring (20) als Dichteinrichtung ausgebildet ist.

11. Rückhaltevorrichtung nach einem der Ansprüche 1 bis 9,
**dadurch gekennzeichnet, dass** die Dichteinrichtung (130, 230) getrennt von dem zweiten Bremsring (20) vorgesehen ist.

12. Rückhaltevorrichtung nach Anspruch 11,
**dadurch gekennzeichnet, dass** die Dichteinrichtung (130, 230) in Füllrichtung (R) stromabwärts des zweiten Bremsrings (120, 220) beabstandet zu diesem anordenbar ist.

13. Rückhaltevorrichtung nach Anspruch 11 oder 12,
**dadurch gekennzeichnet, dass** die Dichteinrichtung (130, 230) durch einen Dichtring (130, 230) gebildet ist, der ortsfest auf dem Füllrohr (F) anordenbar ist.

14. Clipmaschine zum Herstellen von wurstförmigen Produkten, insbesondere Wurstprodukten (W), aus einem in ein schlauchförmiges Verpackungshüllenmaterial (V) füllbares viskoses oder granulares Füllgut, mit einem Füllrohr (F) zum Befüllen des schlauchförmigen Verpackungshüllenmaterials (V) mit dem Füllgut in Füllrichtung (R), mit einem auf dem Füllrohr (F) angeordneten Vorrat an Verpackungshüllenmaterial (V) und einer Rückhaltevorrichtung zum Aufbringen einer vorbestimmten Reibkraft, die auf das in Füllrichtung (R) abziehbare Verpackungshüllenmaterial (V) entgegen der Füllrichtung (R) einwirkt,
**dadurch gekennzeichnet, dass** die Rückhaltevorrichtung einen Aufbau gemäß einem der Ansprüche 1 bis 13 aufweist.

## Claims

1. A retention device for a tubular casing material (V) for receiving a viscous or granular filling material in a packaging machine, in particular a clipping machine which has a filling tube (F) for filling the tubular casing material (V) with the filling material, wherein the retention device includes: a first brake ring (10; 110, 210) which can be mounted coaxially on the filling tube (F), the inner diameter of said brake ring being larger than the outer diameter of the filling tube (F) and on the inner circumference of which brake ring a first brake means (12, 112) is provided, along which the casing material (V) can be guided in the filling direction (R) of the filling material against a friction force acting upon the casing material (V), wherein
a second brake ring (20, 120, 220) is provided which is stationarily disposed on the filling tube (F) and which has a counter-brake means (22, 120b) on its outer circumference, wherein the casing material (V) can be guided between the first brake means (12, 112) of the first brake ring (10, 110, 210) and the counter-brake means (22, 120b) of the second brake ring (20, 120, 220) and wherein the first brake ring (10, 110, 210) is reversibly displaceable in the filling direction (R) for setting a predetermined friction force for the casing material (V) at the first brake means (12, 112) of the first brake ring (10; 110) and at the counter-brake means (22, 120b) of the second brake ring (20, 120, 220),
**characterized in that** a sealing mechanism (20, 130, 230) is provided which is stationarily disposed on the filling tube (F) and the outer diameter of which is approximately equal to the inner diameter of the casing material (V), with which it is then in sealing contact.

2. The retention device according to claim 1,
**characterized in that** the casing material (V) can be guided in sandwiched form between the first and the second brake ring (10, 20).

3. The retention device according to claim 1 or 2,
**characterized in that** the brake means (12) of the first brake ring (10) is formed by a first braking surface (12) coaxial with its centre axis (M) and tapering conically in the filling direction (R), and that the counter-brake means (22) of the second brake ring (20) is formed by a second braking surface (22) coaxial with its centre axis (M) and conically tapering in the filling direction (R).

4. The retention device according to claim 3,
**characterized in that** the gradient of the conical second braking surface (22) of the second brake ring (20) is at least approximately equal to the gradient of the conical first braking surface (12) of the first brake ring (10).

5. The retention device according to claim 4,
**characterized in that** the first brake ring (110, 210) is provided on its inner circumference with a first braking deflection section (112d, 212d) for the casing material (V), at which the casing material (V) can be deflected for the first deflection of the at least approximately Z-shaped path (Z).

6. The retention device according to claim 4 or 5,
**characterized in that** the second brake ring (120, 220) is provided on its outer circumference with a second counterbraking deflection section (120b, 220b) for the casing material (V), at which the casing material (V) can be deflected for the second deflection of the at least approximately Z-shaped path (Z).

7. The retention device according to any one of claims 1 to 6,
**characterized in that** a preferably powered device is provided for moving the first brake ring (10, 110, 210).

8. The retention device according to any one of claims 1 to 7,
**characterized in that** a locking mechanism is provided for locking the first brake ring (10, 110, 210) in an axial position.

9. The retention device according to any one of claims 1 to 8,
**characterized in that** a regulating device is provided for maintaining the predetermined friction force.

10. The retention device according to any one of claims 1 to 9,
**characterized in that** the second brake ring (20) is embodied as a sealing mechanism.

11. The retention device according to any one of claims 1 to 9,
**characterized in that** the sealing mechanism (130, 230) is provided separately from the second brake ring (20).

12. The retention device according to claim 11,
**characterized in that** the sealing mechanism (130, 230) can be disposed downstream in the filling direction (R) from the second brake ring (120, 220) at a distance therefrom.

13. The retention device according to claim 11 or 12,
**characterized in that** the sealing mechanism (130, 230) is formed by a sealing ring (130, 230) which can be stationarily disposed on the filling tube (F).

14. A clipping machine for producing sausage-shaped products, in particular sausage products (W), from a viscous or granular filling material which can be filled into a tubular casing material (V), said machine comprising a filling tube (F) for filling the tubular casing material (V) with the filling material in the filling direction (R), a supply of casing material (V) disposed on the filling tube (F) and a retention device for applying a predetermined friction force which acts counter to the filling direction (R) on the casing material (V) which can be drawn off in the filling direction (R),
**characterized in that** the retention device has a structure according to any one of claims 1 to 13.

## Revendications

1. Dispositif de retenue d'une matière (V) d'enveloppe de conditionnement en forme de gaine pour la réception d'un produit à embosser visqueux ou granulé dans une machine de conditionnement, notamment dans une machine d'agrafage, qui a un tube (F) d'embossage pour embosser le produit à embosser dans la matière (V) d'enveloppe de conditionnement en forme de gaine, le dispositif de retenue comportant: un premier anneau (10, 110, 210) de frein, qui peut être mis sur le tube (F) d'embossage, dont le diamètre intérieur est plus grand que le diamètre extérieur du tube (F) d'embossage, et sur le pourtour intérieur duquel est prévu un premier moyen (12, 112) de frein, sur lequel la matière (V) d'enveloppe de conditionnement peut être guidée dans le sens (R) d'embossage du produit à embosser à l'encontre d'une force de frottement s'appliquant à la matière (V) d'enveloppe de conditionnement, dans lequel
il est prévu un deuxième anneau (20, 120, 220) de frein, qui est disposé à poste fixe sur le tube (F) d'embossage et qui a un moyen (22, 120b) de frein antagoniste sur son pourtour extérieur, la matière (V) d'enveloppe de conditionnement pouvant passer entre le premier moyen (12, 112) de frein du premier anneau (10, 110, 210) de frein et le moyen (22, 120b) de frein antagoniste du deuxième anneau (20, 120, 220) de frein et le premier anneau (10, 110, 210) de frein pouvant, pour le réglage d'une force de frottement déterminée à l'avance de la matière (V) d'enveloppe de conditionnement sur le premier moyen (12, 112) de frein du premier anneau (10 ; 110) de frein et sur le moyen (22, 120b) de frein antagoniste du deuxième anneau (20, 120, 220) de frein, être déplacé réversiblement dans le sens (R) d'embossage, **caractérisé en ce qu'**il est prévu un dispositif (20, 130, 230) d'étanchéité, qui est monté à poste fixe sur le tube (F) d'embossage et dont le diamètre extérieur correspond à peu près au diamètre intérieur de la matière (V) d'enveloppe de conditionnement, à laquelle il s'applique alors de manière étanche.

2. Dispositif de retenue suivant la revendication 1,
**caractérisé en ce que** la matière (V) d'enveloppe de conditionnement peut passer à la manière d'un sandwich entre le premier et le deuxième anneaux (10, 20) de frein.

3. Dispositif de retenue suivant la revendication 1 ou 2,
**caractérisé en ce que** le moyen (12) de frein du premier anneau (10) de frein est formé par une première surface (12) de frein coaxiale à son axe (M) médian et se rétrécissant coniquement dans le sens (R) d'embossage et **en ce que** le moyen (22) de frein antagoniste du deuxième anneau (20) de frein est formé par une deuxième surface (22) de frein coaxiale à son axe (M) médian et se rétrécissant coniquement dans le sens (R) d'embossage.

4. Dispositif de retenue suivant la revendication 3,
**caractérisé en ce que** la pente de la deuxième surface (22) de frein conique du deuxième anneau (20) de frein correspond au moins à peu près à la pente de la première surface (12) de frein conique du premier anneau (10) de frein.

5. Dispositif de retenue suivant la revendication 4,
**caractérisé en ce que** le premier anneau (110, 210) de frein a, sur son pourtour intérieur, une première section (112d, 212d) de déviation de frein pour la matière (V) d'enveloppe de conditionnement, sur laquelle la matière (V) d'enveloppe de conditionnement peut être déviée pour la première déviation du chemin (Z) au moins à peu près en forme de Z.

6. Dispositif de retenue suivant la revendication 4 ou 5,
**caractérisé en ce que** le deuxième anneau (120, 220) de frein a, sur son pourtour extérieur, une deuxième section (120b, 220b) de déviation de frein antagoniste pour la matière (V) d'enveloppe de conditionnement, sur laquelle la matière (V) d'enveloppe de conditionnement peut être déviée pour la deuxième déviation du chemin (Z) au moins à peu près en forme de Z.

7. Dispositif de retenue suivant l'une des revendications 1 à 6,
**caractérisé en ce qu'**il est prévu un dispositif d'entraînement, de préférence motorisé, pour le déplacement du premier anneau (10, 110, 210) de frein.

8. Dispositif de retenue suivant l'une des revendications 1 à 7,
**caractérisé en ce qu'**il est prévu un dispositif de verrouillage du premier anneau (10, 110, 210) de frein dans une position axiale.

9. Dispositif de retenue suivant l'une des revendications 1 à 8,
**caractérisé en ce qu'**il est prévu un dispositif de régulation pour maintenir une force de frottement déterminée à l'avance.

10. Dispositif de retenue suivant l'une des revendications 1 à 9,
**caractérisé en ce que** le deuxième anneau (20) de frein est constitué en dispositif d'étanchéité.

11. Dispositif de retenue suivant l'une des revendications 1 à 9,
**caractérisé en ce que** le dispositif (130, 230) d'étanchéité est prévu séparé du deuxième anneau (20) de frein.

12. Dispositif de retenue suivant la revendication 11,
**caractérisé en ce que** le dispositif (130, 230) d'étanchéité peut être mis dans le sens (R) d'embossage en aval du deuxième anneau (120, 220) de frein en en étant à distance.

13. Dispositif de retenue suivant la revendication 11 ou 12,
**caractérisé en ce que** le dispositif (130, 230) d'étanchéité est formé par un anneau (130, 230) d'étanchéité, qui peut être monté à poste fixe sur le tube (F) d'embossage.

14. Machine d'agrafage pour la fabrication de produits en forme de saucisse, notamment de produits (W) de saucisse, à partir d'un produit à embosser visqueux ou granulé, pouvant être embossé dans une matière (V) d'enveloppe de conditionnement en forme de gaine, comprenant un tube (F) d'embossage pour embosser le produit à embosser dans la matière (V) d'enveloppe en forme de gaine dans le sens (R) d'embossage, comprenant une réserve, disposée sur le tube (F) d'embossage, de matière (V) d'enveloppe de conditionnement et un dispositif de retenue pour appliquer une force de frottement déterminée à l'avance, qui s'applique, dans le sens contraire au sens (R) d'embossage, à la matière (V) d'enveloppe de conditionnement pouvant être retirée dans le sens (R) d'embossage,
**caractérisée en ce que** le dispositif de retenue a une structure suivant l'une des revendications 1 à 13.
